(19) Europäisches Patentamt
European Patent Office
Office européen des brevets

(11) **EP 3 287 891 B1**

(12) **FASCICULE DE BREVET EUROPEEN**

(45) Date de publication et mention
de la délivrance du brevet:
**12.06.2019 Bulletin 2019/24**

(51) Int Cl.:
***G06F 7/72*** *(2006.01)*

(21) Numéro de dépôt: **17156308.3**

(22) Date de dépôt: **15.02.2017**

(54) **PROTECTION D'UN CALCUL MODULAIRE**

SCHUTZ EINER MODULAREN BERECHNUNG

PROTECTION OF A MODULAR CALCULATION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **23.08.2016 FR 1657860**

(43) Date de publication de la demande:
**28.02.2018 Bulletin 2018/09**

(73) Titulaire: **STMICROELECTRONICS (ROUSSET)
SAS
13790 Rousset (FR)**

(72) Inventeurs:
• **DIOP, Ibrahima
13004 Marseille (FR)**
• **LIARDET, Pierre-Yvan
13790 Peynier (FR)**
• **LINGE, Yanis
13710 Fuveau (FR)**

(74) Mandataire: **Cabinet Beaumont
4, Place Robert Schuman
B.P. 1529
38025 Grenoble Cedex 1 (FR)**

(56) Documents cités:
**US-A1- 2005 078 821 US-A1- 2015 063 561**

• **Andrea Lesavourey ET AL: "Efficient
Randomized Regular Modular Exponentiation
using Combined Montgomery and Barrett
Multiplications", 13th International Conference
on Se-curity and Cryptography, 1 juillet 2016
(2016-07-01), XP055378689, Extrait de l'Internet:
URL:https://hal.archives-ouvertes.fr/hal-0
1330898/file/randomized-barret-montgomery7 .p
df [extrait le 2017-06-06]**

# Description

## Domaine

La présente description concerne de façon générale les circuits électroniques et, plus particulièrement, les circuits exécutant des opérations d'exponentiation modulaire ou de multiplication par un scalaire sur courbes elliptiques. La présente description concerne plus particulièrement la protection de tels calculs contre des attaques visant à découvrir des quantités manipulées par ces calculs.

## Exposé de l'art antérieur

Dans de nombreuses applications, des circuits électroniques mettent en oeuvre des algorithmes de chiffrement, d'authentification, de calcul de signature, et plus généralement des algorithmes manipulant des données dites secrètes, c'est-à-dire dont on souhaite réserver l'accès à certains utilisateurs ou circuits. Parmi ces algorithmes, certains utilisent des opérations d'exponentiation modulaire, par exemple des algorithmes de type RSA, ou des opérations de multiplication par un scalaire sur courbes elliptiques (ECC), par exemple EC-DSA.

De nombreuses méthodes, dites attaques, existent pour tenter de découvrir ou pirater des données secrètes manipulées par ces calculs. Parmi ces attaques, des attaques dites par injection de fautes consistent à perturber le fonctionnement du circuit à des instants précis de l'exécution de l'opération. L'interprétation des conséquences de ces injections de fautes, sur le fonctionnement du circuit ou les résultats fournis, renseigne le pirate sur la donnée secrète. Cette interprétation s'effectue soit en examinant les résultats fournis par le circuit exécutant le calcul soit par des attaques, dites par canaux cachés, qui exploitent des informations indirectes telles que la consommation du circuit (attaques SPA, DPA), son rayonnement, etc.

Dans les attaques par canaux cachés, on distingue notamment les attaques dites verticales, et les attaques dites horizontales. Les attaques verticales consistent à exploiter les variations d'une même quantité secrète sur plusieurs traces successives, par exemple de consommations, enregistrées en ayant fait différentes hypothèses sur la quantité secrète. Les attaques horizontales consistent à exploiter les différentes opérations d'une même trace et relatives aux quantités secrètes. Les contremesures qui sont généralement efficaces contre des attaques verticales par canaux cachés ne le sont généralement pas contre les attaques horizontales.

Il existe un besoin d'améliorer la protection des données manipulées par des algorithmes exécutant des exponentiations modulaires ou des multiplications scalaires contre des attaques par canaux cachés.

## Résumé

Un mode de réalisation pallie tout ou partie des inconvénients des procédés et circuits usuels de protection de données manipulées par des algorithmes contre des attaques par canaux cachés.

Un mode de réalisation propose un procédé de calcul d'une exponentiation modulaire ou d'une multiplication scalaire par un circuit électronique qui pallie tout ou partie des inconvénients des procédés usuels.

Un mode de réalisation propose un procédé de calcul efficace contre des attaques horizontales.

Un mode de réalisation propose un procédé de calcul efficace contre des attaques par injection de fautes.

Ainsi, un mode de réalisation prévoit un procédé de protection d'un calcul modulaire sur un premier nombre et un deuxième nombre, exécuté par un circuit électronique, comportant les étapes suivantes :

combiner le deuxième nombre à un troisième nombre pour obtenir un quatrième nombre ;
exécuter le calcul modulaire sur les premier et troisième nombres, le résultat étant contenu dans un premier registre ou emplacement mémoire ;
initialiser un deuxième registre ou emplacement mémoire à la valeur du premier registre ou à l'unité ; et successivement, pour chaque bit à l'état 1 du troisième nombre :

si le bit correspondant du quatrième nombre est à l'état 1, le contenu du deuxième registre ou emplacement mémoire est multiplié par l'inverse du premier nombre et le résultat est placé dans le premier registre ou emplacement mémoire,
si le bit correspondant du quatrième nombre est à l'état 0, le contenu du deuxième registre ou emplacement mémoire est multiplié par le premier nombre et le résultat est placé dans le premier registre ou emplacement mémoire.

Selon un mode de réalisation, si le bit du troisième nombre vaut 0, on passe au bit suivant du troisième nombre.

Selon un mode de réalisation, le résultat du calcul modulaire est, à la fin des itérations sur les bits du troisième nombre, dans le deuxième registre ou emplacement mémoire.

Selon un mode de réalisation, le troisième nombre est un nombre aléatoire.

Selon un mode de réalisation, le deuxième nombre est le résultat d'une multiplication d'un cinquième nombre par l'indicatrice d'Euler du modulo.

Selon un mode de réalisation, le calcul est une exponentiation modulaire, le deuxième ou cinquième nombre représentant un exposant auquel soumettre le premier nombre.

Selon un mode de réalisation, le calcul est une multiplication scalaire, le deuxième ou cinquième nombre étant un scalaire à multiplier par le premier nombre.

Un mode de réalisation prévoit un circuit électronique adapté à la mise en oeuvre du procédé ci-dessus.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente, de façon schématique, un mode de réalisation d'un circuit électronique ;
la figure 2 représente, sous forme de blocs, les étapes d'un calcul par la méthode de carré-multiplication par l'échelle de Montgomery ; et
la figure 3 représente, sous forme de blocs, un mode de réalisation d'un procédé de protection d'un calcul d'exponentiation modulaire.

Description détaillée

De mêmes éléments ont été désignés par de mêmes références aux différentes figures. En particulier, les éléments structurels et/ou fonctionnels communs aux différents modes de réalisation peuvent présenter les mêmes références et peuvent disposer de propriétés structurelles, dimensionnelles et matérielles identiques. Par souci de clarté, seuls les éléments utiles à la compréhension des modes de réalisation décrits ont été représentés et seront détaillés. En particulier, les applications des calculs exécutés ou celles des circuits les exécutant n'ont pas été détaillées, les modes de réalisation décrits étant compatibles avec les applications usuelles.

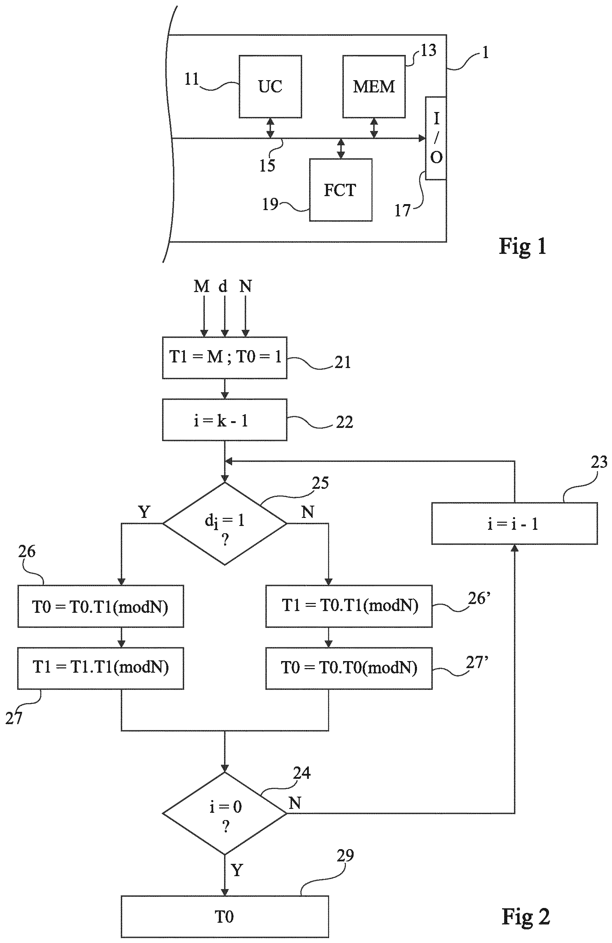

La figure 1 représente, de façon très schématique un circuit électronique 1 du type auquel s'appliquent les modes de réalisation qui vont être décrits.

Le circuit 1 comporte :

une entité de calcul 11 (UC), par exemple une machine d'états, un microprocesseur, un circuit logique programmable, etc. ;
une ou plusieurs zones 13 (MEM) de stockage volatile et/ou non volatile pour stocker tout ou partie des données et clés ;
un ou plusieurs bus 15 de données, d'adresses et/ou de commandes entre les différents éléments internes au circuit 1 et une interface d'entrée-sortie 17 (I/O) de communication avec l'extérieur du circuit 1.

Le circuit 1 peut inclure divers autres circuits en fonction de l'application, symbolisés en figure 1 par un bloc 19 (FCT).

Des opérations d'exponentiation modulaire se retrouvent dans de nombreux algorithmes de chiffrement parmi lesquels, par exemple, l'algorithme connu sous la dénomination RSA.

Une exponentiation modulaire consiste à calculer le résultat C de l'exponentiation d'un nombre M par un entier d (exposant) modulo N, c'est-à-dire appliquer la formule :

$$C = M^d \pmod{N}.$$

Le plus souvent :

le nombre M représente le nombre (ou une information représentative du nombre) que l'on souhaite chiffrer, authentifier, signer, etc. ; et
l'exposant d et le modulo N (le couple (d, N)) représentent la clé (ou des informations représentatives de la clé) de chiffrement, d'authentification, de signature, etc.

Dans l'exemple d'application au chiffrement RSA, la clé de chiffrement est le couple (d, N) et la clé de déchiffrement est un couple (d', N), où N est le modulo de chiffrement et d' l'exposant de déchiffrement.

Le calcul de l'exponentiation modulaire par un circuit électronique (une machine d'états, un processeur exécutant le procédé sous forme de programme, un circuit logique programmable, etc.), par exemple le circuit 1, s'effectue le plus souvent en appliquant une méthode dite de carré-multiplication (square-multiply). Plus précisément, le calcul d'une exponentiation modulaire selon la méthode de carré-multiplication exploite une décomposition de l'exposant. Son exécution, par un circuit électronique, peut mettre en oeuvre une technique couramment appelée échelle de Montgomery (Montgomery Powering Ladder).

La figure 2 représente, sous forme de blocs, les étapes d'un calcul par la méthode de l'échelle de Montgomery.

Le calcul utilise au moins deux registres du circuit 1, ou deux emplacements mémoire, notés arbitrairement T0 et T1, sur lesquels vont être effectuées les opérations. On fera par la suite référence, pour simplifier, à des registres mais il peut à chaque fois également s'agir d'emplacements mémoire.

Le message, par exemple le nombre M, à soumettre à l'exponentiation modulaire est chargé dans le registre T1. L'exposant d est lu bit par bit au cours du calcul. On note di chaque bit de l'exposant d, où i désigne le rang allant de 0 à k-1, où k représente la taille de l'exposant d.

Par la suite, pour simplifier, on confondra les registres et leur contenu, c'est-à-dire qu'en faisant référence à des opérations sur les registres, on entend sur leurs contenus.

Dans une première étape (bloc 21, T1=M, T0=1), le registre T1 est donc chargé avec le nombre M et le registre T0 est initialisé à 1.

On entame alors un calcul en boucle sur les bits de l'exposant d. Par exemple, un compteur i est initialisé à k-1 (bloc 22, i=k-1) et est décrémenté de 1 (bloc 23, i=i-1) à chaque traitement d'un bit di de l'exposant tant que tous les bits n'ont pas été traités (bloc 24, i=0 ?).

A chaque itération, c'est-à-dire pour chaque bit di, on commence par tester la valeur du bit de l'exposant (bloc 25, $d_i=1$ ?).

Si le bit courant di vaut 1 (sortie Y du bloc 25), le contenu du registre T0 est multiplié, modulo N, par le contenu du registre T1 et le résultat est placé dans le registre T0 (bloc 26, T0=T0.T1 (mod N)), puis le contenu du registre T1 est élevé au carré, modulo N, et le résultat est placé dans le registre T1 (bloc 27, T1=T1.T1 (mod N)). Cela revient à effectuer l'opération de multiplication-carré, le produit des deux registres est mis dans le registre T0, puis le contenu du registre T1 est remplacé par son carré.

Si le bit courant di vaut 0 (sortie N du bloc 25), le contenu du registre T0 est multiplié, modulo N, par le contenu du registre T1 et le résultat est placé dans le registre T1 (bloc 26', T1=T0.T1 (mod N)), puis le contenu du registre T0 est élevé au carré, modulo N, et le résultat est placé dans le registre T0 (bloc 27', T0=T0. T0 (mod N)). Cela revient à effectuer l'opération de multiplication-carré, le produit des deux registres est mis dans le registre T1, puis, le contenu du registre T0 est remplacé par son carré.

Tant que tous les bits de l'exposant d n'ont pas été traités (sortie N du bloc 24), on décrémente le compteur i (bloc 23) et on revient à l'étape 25. Une fois que tous les bits de l'exposant d ont été traités (sortie Y du bloc 24), le registre T0 contient le résultat de l'exponentiation modulaire (bloc 29, T0), c'est-à-dire la valeur C = $M^d$ (mod N).

Le calcul illustré par la figure 2 peut s'écrire également de la façon suivante :

$$T0 = 1 \ (\text{étape } 21)$$

$$T1 = M \ (\text{étape } 21)$$

Pour i=k-1 à 0 (étapes 22 à 27) :

$$b = 1-d_i$$

$$Tb = T0.T1 \ (\text{mod } N)$$

$$Td_i = Td_i.Td_i \ (\text{mod } N)$$

Fin de boucle (sortie Y du bloc 24)
Retourner T0 (étape 29).

Pour protéger le calcul contre des attaques par canaux cachés du type par analyse différentielle de la consommation (DPA ou Differential Power Analysis), on a déjà proposé un masquage de l'exposant par un nombre aléatoire en ajoutant à l'exposant un multiple de l'indicatrice d'Euler généralement notée phi(N) préalablement au calcul.

Une telle solution est efficace sur les attaques verticales. Toutefois, ce nombre aléatoire est sans effet sur des attaques horizontales dans la mesure où elles n'exploitent qu'une seule trace, donc une seule exécution dépendant d'un seul nombre aléatoire. L'exposant obtenu par l'attaquant (horizontal) est équivalent au secret visé.

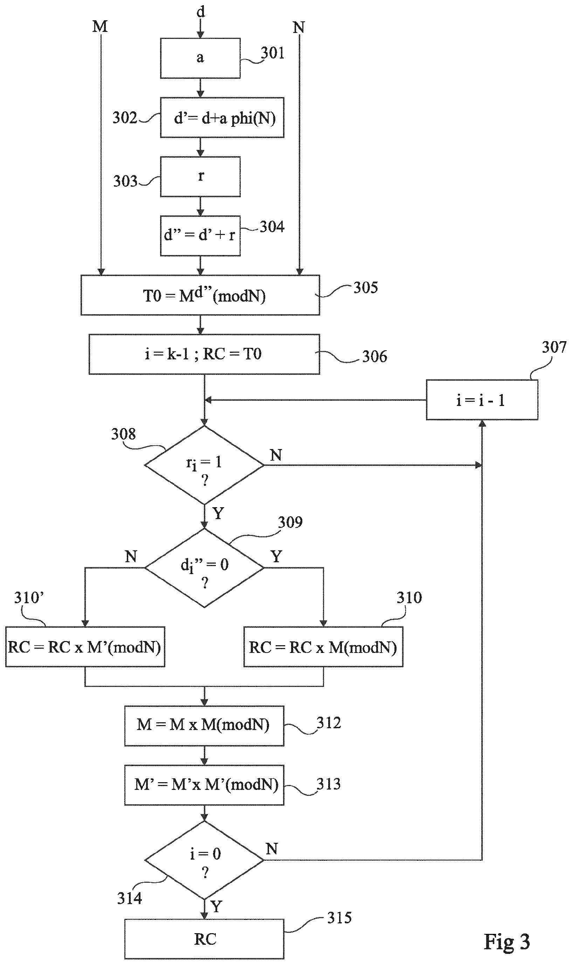

La figure 3 représente, sous forme de blocs, un mode de réalisation d'un procédé de protection d'un calcul d'exponentiation modulaire résistant à des attaques horizontales par canaux cachés. Comme précédemment, l'objectif est de calculer la valeur C = $M^d$ (mod N) par la méthode de l'échelle de Montgomery.

En figure 3, on suppose également une protection complémentaire par masquage de l'exposant d par un nombre aléatoire en lui ajoutant un multiple aléatoire de l'indicatrice d'Euler de N (phi(N)). Ainsi, dans une première étape (bloc 301, a), on sélectionne un nombre a, par exemple, un nombre indépendant des clés et messages manipulés par l'algorithme, de préférence un nombre aléatoire. Puis (bloc 302, d'=d+a.phi(N)), ce nombre a, est multiplié par l'indicatrice d'Euler de N, phi(N), et le résultat est ajouté à l'exposant d.

Dans une deuxième étape (bloc 303, r), on sélectionne un nombre r, par exemple, un nombre indépendant des clés et messages manipulés par l'algorithme, de préférence un nombre aléatoire de même taille que l'exposant d'. Puis (bloc 304, d"=d'+r), ce nombre r est ajouté (combiné bit à bit par une fonction de type OU-Exclusif noté +) à l'exposant d'. Ainsi, à l'issue de l'étape 304, l'exposant est faussé par le nombre r qui peut être de même taille que d'. La taille (m bits) de l'exposant d" est généralement différente de la taille (k bits) de l'exposant d'origine d.

On soumet alors (bloc 305, T0= $M^{d"}$ (mod N)) le message M à une exponentiation modulaire d'exposant d", par exemple du type par l'algorithme d'échelle de Montgomery comme exposé en figure 2. Par exemple, le calcul utilise deux registres ou emplacements mémoire du circuit 1 sur lesquels vont être effectuées les opérations. Le message, par exemple le nombre M, à soumettre à l'exponentiation modulaire, est chargé dans l'un des registres et l'autre registre T0 est initialisé à l'unité. L'exposant d" est chargé dans un autre registre ou réside dans la mémoire (d"i représentant chaque bit de l'exposant d", où i désigne le rang allant de 0 à m-1). A la fin du processus, le registre T0 contient le nombre $M^{d"}$ (mod N).

On entame alors le processus de correction qui consiste en un calcul en boucle sur les bits de l'exposant d" pour corriger le résultat. Par exemple (bloc 306, i = k-1 ; RC = T0), un compteur i est initialisé à k-1 (taille de l'exposant d'origine d dont on souhaite corriger les bits faussés) et un registre de calcul (ou emplacement mémoire) RC est initialisé à la valeur du registre T0. Le compteur i est décrémenté de 1 (bloc 307, i=i-1) à chaque traitement d'un bit d"$_i$ de l'exposant tant que tous les bits n'ont pas été traités (bloc 314, i=0 ?).

A chaque itération, c'est-à-dire pour chaque bit d"$_i$, on détermine (bloc 308, r$_i$ = 1 ?) si le bit correspondant (de même poids) du nombre r est à l'état 1, c'est-à-dire que le nombre r a faussé ce bit de l'exposant d'.

Dans la négative (sortie N du bloc 308), on passe au bit suivant de l'exposant (bloc 307).

Dans l'affirmative (sortie Y du bloc 308), on teste si le bit de l'exposant d"$_i$ vaut 0 (bloc 309, d"$_i$ =0 ?).

Si le bit courant d"$_i$ vaut 0 (sortie Y du bloc 309), le contenu du registre RC est multiplié (modulo N), par le message M et le résultat est placé dans le registre RC (bloc 310, RC=RC.M (mod N)).

Si le bit courant d"$_i$ vaut 1 (sortie N du bloc 309), le contenu du registre RC est multiplié par l'inverse de M (modulo N), noté M', et le résultat est placé dans le registre RC (bloc 310', RC=RC.M' (mod N)) . L'inverse modulaire de M est le nombre M' tel que M.M' = 1 (mod N).

Les étapes 310 et 310' correspondent à, si le nombre r a conduit à changer le bit d'exposant d' de 1 à 0, multiplier la valeur de correction RC courante par le message et, si à l'inverse le nombre r a conduit à changer le bit d'exposant d' de 0 à 1, multiplier la valeur de correction RC courante par l'inverse du message.

Puis, on élève au carré modulo N (bloc 312, M=M.M (mod N)) le contenu du registre M et on élève au carré modulo N (bloc 313, M'=M'.M' (mod N)) le contenu du registre M'.

Tant que tous les bits de l'exposant d" n'ont pas été traités (sortie N du bloc 314), on décrémente le compteur i et on revient à l'étape 307. Une fois que tous les bits de l'exposant d" ont été traités (sortie Y du bloc 314), le registre RC contient le résultat de l'exponentiation modulaire (bloc 315, RC), c'est-à-dire la valeur C = M$^d$ (mod N), corrigée.

En variante, dans l'étape 306, le registre RC est mis à 1 (au lieu de T0) et une étape est ajoutée après l'étape 315 dans laquelle le résultat de l'étape 315 est multiplié par T0.

Un avantage de la réalisation décrite en relation avec la figure 3 est que le calcul de l'exponentiation s'effectue sur un exposant faussé. Par conséquent, une attaque horizontale ne fournit aucune indication sur le bit de l'exposant. En particulier, on aurait pu penser intervenir sur le bit de l'exposant à chaque étape. Toutefois, cela aurait rendu le masquage visible. Or, dans la réalisation de la figure 3, le processus de calcul de l'exponentiation modulaire (bloc 35) n'est pas modifié autrement que par ses entrées (plus particulièrement l'exposant faussé d"). Par conséquent, un attaquant va croire exploiter, dans une attaque horizontale, une trace correspondant à l'exposant alors qu'elle ne l'est pas. Ainsi, l'analyse de la trace en cas d'attaque horizontale devient inexploitable.

Un autre avantage est que cette contremesure est efficace en cas d'attaques verticales même si le masquage par le multiple de phi(n) utilise un petit nombre aléatoire a dans l'étape 302.

La réalisation de la figure 3 s'applique quelle que soit la méthode utilisée pour réaliser l'exponentiation modulaire. En effet, l'opération de masquage 304 et les opérations de démasquage 306 à 315 sont indépendantes des étapes réalisées pour l'exponentiation proprement dite (figure 2). Ainsi, on pourra utiliser une autre technique d'exponentiation que la méthode d'échelle de Montgomery, par exemple une méthode, dite de Yao, ou de chaines d'addition.

Par ailleurs, le processus de protection exposé en relation avec la figure 3 s'applique également à la protection d'un calcul de produit scalaire de points sur courbes elliptiques. Des opérations de multiplications scalaires de points sont utilisées pour des calculs sur des courbes elliptiques qui constituent une autre catégorie d'algorithme de chiffrement. Une multiplication scalaire consiste à calculer le résultat C de la multiplication d'un point P d'une courbe elliptique G par un entier d (scalaire), c'est-à-dire appliquer la formule :

$$C = dP.$$

Le plus souvent :

le point P représente le nombre (ou une information représentative du nombre) que l'on souhaite chiffrer, authentifier, signer, etc. ; et

le scalaire d et la courbe (le couple (d, G)) représentent la clé (ou des informations représentatives de la clé) de chiffrement, d'authentification, de signature, etc.

Comme pour une exponentiation modulaire, la multiplication scalaire sur courbe elliptique par un circuit électronique (une machine d'états, un processeur exécutant le procédé sous forme de programme, un circuit logique programmable, etc.), par exemple le circuit 1, s'effectue le plus souvent par la méthode de l'échelle de Montgomery.

De la même façon que pour une exponentiation modulaire, on prévoit de masquer le scalaire d en un nombre d'en lui ajoutant un multiple de l'ordre du sous-groupe de la courbe elliptique contenant le point P (d'=d+a.ord(P)), puis d'appliquer une faute sur le scalaire d' pour obtenir une valeur d" avec laquelle on effectue la multiplication scalaire, et enfin de corriger le calcul une fois le calcul de d"P terminé. Le démasquage est identique à celui opéré dans le cas de l'exponentiation modulaire, en adaptant les opérations à celles sur les courbes elliptiques c'est-à-dire que les produits sont remplacés par des additions de points, les carrés par des doublements de points, et l'inverse est remplacé par l'opposé du point. Ainsi, par rapport à la figure 3, la donnée d'entrée est le point P au lieu du message M, la donnée M' est remplacée par P'=-P, et les opérations de multiplication modulaire sont remplacées par des additions de points sur une courbe elliptique. Enfin, le contenu du bloc 305 calcule une multiplication scalaire au lieu d'une exponentiation.

Divers modes de réalisation ont été décrits. Diverses variantes et modifications apparaîtront à l'homme de l'art. En particulier, la mise en oeuvre pratique des modes de réalisation qui ont été décrits est à la portée de l'homme du métier à partir des indications fonctionnelles données ci-dessus.

**Revendications**

1. Procédé de protection d'un calcul d'exponentiation modulaire sur un premier nombre (M) et un deuxième nombre (d'), exécuté par un circuit électronique (1), comportant les étapes suivantes :

   combiner le deuxième nombre (d') à un troisième nombre (r) pour obtenir un quatrième nombre (d") ;
   exécuter le calcul modulaire sur les premier et troisième nombres, le résultat étant contenu dans un premier registre ou emplacement mémoire (T0) ;
   initialiser un deuxième registre ou emplacement mémoire (RC) à la valeur du premier registre ou à l'unité ; et
   successivement, pour chaque bit ($r_i$) à l'état 1 du troisième nombre :

      si le bit correspondant ($d"_i$) du quatrième nombre est à l'état 1, le contenu du deuxième registre ou emplacement mémoire est multiplié (310') par l'inverse du premier nombre et le résultat est placé dans le premier registre ou emplacement mémoire,
      si le bit correspondant du quatrième nombre est à l'état 0, le contenu du deuxième registre ou emplacement mémoire est multiplié (310) par le premier nombre et le résultat est placé dans le premier registre ou emplacement mémoire.

2. Procédé selon la revendication 1, dans lequel si le bit ($r_i$) du troisième nombre (r) vaut 0, on passe au bit suivant (307) du troisième nombre (d).

3. Procédé selon la revendication 1 ou 2, dans lequel le résultat du calcul modulaire est, à la fin des itérations sur les bits ($r_i$) du troisième nombre (r), dans le deuxième registre ou emplacement mémoire (RC).

4. Procédé selon l'une quelconque des revendications 1 à 3, dans lequel le troisième nombre est un nombre aléatoire (r).

5. Procédé selon l'une quelconque des revendications 1 à 4, dans lequel le deuxième nombre est le résultat d'une multiplication d'un cinquième nombre (d) par l'indicatrice d'Euler du modulo (N).

6. Procédé selon l'une quelconque des revendications 1 à 5, dans lequel le deuxième ou cinquième nombre représente un exposant (d) auquel soumettre le premier nombre (M).

7. Circuit électronique (1) adapté à la mise en oeuvre du procédé selon l'une quelconque des revendications 1 à 6.

**Patentansprüche**

1. Verfahren zum Schutz einer modularen Potenzierungsberechnung an einer ersten Zahl (M) und einer zweiten Zahl (d'), die von einer elektronischen Schaltung (1) ausgeführt wird, das folgende Schritte aufweist:

   Kombinieren der zweiten Zahl (d') mit einer dritten Zahl (r), um eine vierte Zahl (d") zu erhalten;
   Ausführen der modularen Berechnung an der ersten und dritten Zahl, wobei das Ergebnis in einem ersten Register- oder Speicherplatz (T0) enthalten ist;
   Initialisieren eines zweiten Register- oder Speicherplatzes (RC) zu dem Wert des ersten Registers oder zu eins; und
   nacheinander für jedes Bit ($r_i$) im Zustand 1 der dritten Zahl:

      wenn sich das entsprechende Bit ($d"_i$) der vierten Zahl im Zustand 1 befindet, wird der Inhalt des zweiten Register- oder Speicherplatzes mit der Inversen bzw. Umkehrzahl der ersten Zahl multipliziert (310') und das Ergebnis in den ersten Register- oder Speicherplatz gestellt,
      wenn sich das entsprechende Bit der vierten Zahl im Zustand 0 befindet, wird der Inhalt des zweiten Register- oder Speicherplatzes mit der ersten Zahl multipliziert (310) und das Ergebnis in den ersten Register- oder Speicherplatz gestellt.

2. Verfahren nach Anspruch 1, wobei, wenn das Bit ($r_i$) der dritten Zahl (r) 0 ist, zum nächsten Bit (307) der dritten Zahl (d) übergegangen wird.

3. Verfahren nach Anspruch 1 oder 2, wobei das Ergebnis der modularen Berechnung am Ende der Iterationen an den Bits ($r_i$) der dritten Zahl (r), im zweiten Register- oder Speicherplatz (RC) ist.

4. Verfahren nach einem der Ansprüche 1 bis 3, wobei die dritte Zahl eine Zufallszahl (r) ist.

5. Verfahren nach einem der Ansprüche 1 bis 4, wobei die zweite Zahl das Ergebnis einer Multiplikation einer fünften Zahl (d) mit der Euler-Zählfunktion des Modulo (N) ist.

6. Verfahren nach einem der Ansprüche 1 bis 5, wobei die zweite oder fünfte Zahl einen Exponenten (d) darstellt, der ab die erste Zahl (M) anzulegen ist.

7. Eine elektronische Schaltung (1), die geeignet ist, das Verfahren nach einem der Ansprüche 1 bis 6 durchzuführen.

**Claims**

1. A method of protecting a modular exponentiation calculation on a first number (M) and a second number (d'), executed by an electronic circuit (1), comprising the steps of:

   combining the second number (d') with a third number (r) to obtain a fourth number (d");
   executing the modular calculation on the first and third numbers, the result being contained in a first register or memory location (T0);
   initializing a second register or memory location (RC) to the value of the first register or to one; and
   successively, for each bit ($r_i$) at state 1 of the third number:

   if the corresponding bit ($d"_i$) of the fourth number is at state 1, the content of the second register or memory location is multiplied (310') by the inverse of the first number and the result is placed in the first register or memory location,
   if the corresponding bit of the fourth number is at state 0, the content of the second register or memory location is multiplied (310) by the first number and the result is placed in the first register or memory location.

2. The method of claim 1 wherein if the bit ($r_i$) of the third number (r) is 0, it is proceeded to the next bit (307) of the third number (d).

3. The method of claim 1 or 2, wherein the result of the modular calculation is, at the end of the iterations on the bits ($r_i$) of the third number (r), in the second register or memory location (RC).

4. The method of any of claims 1 to 3, wherein the third number is a random number (r).

5. The method of any of claims 1 to 4, wherein the second number is the result of a multiplication of a fifth number (d) by the Euler totient function of the modulo (N).

6. The method of any of claims 1 to 5, wherein the second or fifth number represents an exponent (d) to be applied to the first number (M).

7. An electronic circuit (1) capable of implementing the method of any of claims 1 to 6.

Fig 1

Fig 2

d

M
N

301
a

302
d' = d+a phi(N)

303
r

304
d" = d' + r

305
$T0 = M^{d"}(mod N)$

306
i = k-1 ; RC = T0

307
i = i - 1

308
$r_i = 1$
?
N

Y

309
$d_i" = 0$
?
N
Y

310'
RC = RC x M'(mod N)

310
RC = RC x M(mod N)

312
M = M x M(mod N)

313
M' = M' x M'(mod N)

314
i = 0
?
N

Y

315
RC

Fig 3